(19) Europäisches Patentamt
European Patent Office
Office européen des brevets

(11) **EP 2 902 720 A1**

(12) **EUROPEAN PATENT APPLICATION**
published in accordance with Art. 153(4) EPC

(43) Date of publication:
**05.08.2015 Bulletin 2015/32**

(51) Int Cl.:
**F24F 11/02** (2006.01)     **F24F 7/007** (2006.01)

(21) Application number: **13840973.5**

(86) International application number:
**PCT/JP2013/066567**

(22) Date of filing: **17.06.2013**

(87) International publication number:
**WO 2014/050227 (03.04.2014 Gazette 2014/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **28.09.2012 JP 2012218202**

(71) Applicant: **Daikin Industries, Ltd.**
**Osaka-shi, Osaka 530-8323 (JP)**

(72) Inventor: **MURAKAMI, Yuuki**
**NaKazaki-Nishi 2-chome**
**Kita-ku, Osaka-shi**
**Osaka 530-8323 (JP)**

(74) Representative: **Global IP Europe**
**Patentanwaltskanzlei**
**Pfarrstraße 14**
**80538 München (DE)**

(54) **CONTROLLER FOR VENTILATION DEVICE**

(57) A controller (10) is provided with an acquiring section (12), a calculating section (13), and a determining section (14). The acquiring section (12) acquires information on outdoor temperature (OT), indoor temperature (IT), and set temperature (SP) of an air conditioner (2). The calculating section (13) calculates an air conditioner consumed power reduction amount and a ventilation apparatus consumed power amount which is consumed by the ventilation apparatus (3) in a case where outdoor air cooling or outdoor air heating is performed. The determining section (14) determines that outdoor air cooling or outdoor air heating is to be performed when the air conditioner consumed power reduction amount is greater than the ventilation apparatus consumed power amount in a case where the outdoor temperature (OT), the indoor temperature (IT), and the set temperature (SP) satisfy predetermined conditions.

FIG. 8

**Description**

TECHNICAL **FIELD**

The present invention relates to a controller for a ventilation apparatus.

BACKGROUND ART

In the prior art, a controller for a ventilation apparatus is known which achieves an improvement in comfort and energy savings by performing heat load treatment for a target space due to an outdoor air introducing operation where outdoor air is introduced into the target space with satisfying of predetermined conditions as the impetus and reducing the energy consumed in an air conditioner which is installed in the target space. For example, a controller for a ventilation apparatus, which controls so that an outdoor air introducing operation is performed in a case where the indoor or outdoor temperature and a set temperature of an air conditioner satisfy predetermined conditions, is proposed in PTL 1 (Japanese Unexamined Patent Application Publication No. H9-178242). In addition, a controller for a ventilation apparatus, which controls so that an outdoor air introducing operation is performed in a case where the indoor or outdoor temperature or humidity and a set temperature or humidity of an air conditioner satisfy predetermined conditions, is proposed in PTL 2 (Japanese Unexamined Patent Application Publication No. 2011-21881).

**SUMMARY OF THE INVENTION**

<Problems to be Solved by the Invention>

However, cases are considered in the controller for a ventilation apparatuses in the prior art where the amount of energy consumed in the ventilation apparatus during the outdoor air introducing operation is greater than the amount of energy consumed in the air conditioner which is reduced due to the outdoor air introducing operation, and on the contrary, there is no energy saving.
Therefore, the problem of the present invention is to provide a controller for a ventilation apparatus with superior comfort and energy saving.

<Means to Solve the Problems>

A controller for a ventilation apparatus according to a first aspect of the present invention, which performs heat load treatment for a target space along with an air conditioner by performing an outdoor air introducing operation where outdoor air is introduced, is provided with an information acquiring section, an energy amount calculating section, and an outdoor air introduction determining section. The information acquiring section acquires information on outdoor temperature, target space temperature in the target space, and set temperature of the air conditioner. The energy amount calculating section calculates an air conditioner consumed energy reduction amount, which is the amount of energy consumed in the air conditioner which is reduced by performing the outdoor air introducing operation, and a ventilation apparatus consumed energy amount which is consumed by the ventilation apparatus. The outdoor air introduction determining section determines that the outdoor air introducing operation is to be performed when the air conditioner consumed energy reduction amount is greater than the ventilation apparatus consumed energy amount in a case where the outdoor temperature, the target space temperature, and the set temperature satisfy predetermined conditions.
In the controller for a ventilation apparatus according to the first aspect of the present invention, the outdoor air introduction determining section determines that the outdoor air introducing operation is to be performed when the air conditioner consumed energy reduction amount is greater than the ventilation apparatus consumed energy amount in a case where the outdoor temperature, the target space temperature, and the set temperature satisfy predetermined conditions. Due to this, it is possible to suppress the ventilation apparatus consumed energy amount during the outdoor air introducing operation from being greater than the air conditioner consumed energy reduction amount. Accordingly, it is possible to improve energy saving while securing comfort.
Here, the energy consumed amount is the amount of energy which is consumed. In addition, energy is, for example, electricity, and the amount of energy is, for example, power which is expressed in the unit of watts or the like or is an amount of power which is expressed in the unit of watt-hours or the like.
A controller for a ventilation apparatus according to a second aspect of the present invention is the controller for a ventilation apparatus according to the first aspect, where the information acquiring section also acquires information on outdoor humidity and target space humidity in the target space. The outdoor air introduction determining section determines that the outdoor air introducing operation is to be performed when the air conditioner consumed energy reduction amount is greater than the ventilation apparatus consumed energy amount in a case where the outdoor temperature, the target space temperature, the set temperature, the outdoor humidity, and the target space humidity satisfy predetermined conditions.

In the controller for a ventilation apparatus according to the second aspect of the present invention, the outdoor air introduction determining section determines that the outdoor air introducing operation is to be performed when the air conditioner consumed energy reduction amount is greater than the ventilation apparatus consumed energy amount in a case where the outdoor temperature, the target space temperature, the set temperature, the outdoor humidity, and the target space humidity satisfy predetermined conditions. Due to this, it is possible to determine whether or not outdoor air introduction is to be performed with greater precision. As such, it is possible to further suppress the ventilation apparatus consumed energy amount during the outdoor air introducing operation from being greater than the air conditioner consumed energy reduction amount.

A controller for a ventilation apparatus according to a third aspect of the present invention, which performs heat load treatment for a target space along with an air conditioner by performing an outdoor air introducing operation where outdoor air is introduced, is provided with an information acquiring section and an outdoor air introduction determining section. The information acquiring section acquires information on outdoor temperature, target space temperature in the target space, set temperature of the air conditioner, and a correction value. The correction value is set based on an air conditioner consumed energy reduction amount and a ventilation apparatus consumed energy amount which is consumed by the ventilation apparatus. The air conditioner consumed energy reduction amount is the amount of energy consumed in the air conditioner which is reduced by performing the outdoor air introducing operation. The outdoor air introduction determining section determines that the outdoor air introducing operation is to be performed in a case where a value where the correction value is added to the outdoor temperature, the target space temperature, and the set temperature satisfy predetermined conditions.

In the controller for a ventilation apparatus according to the third aspect of the present invention, the outdoor air introduction determining section determines that the outdoor air introducing operation is to be performed in a case where the value where the correction value, which is set based on the air conditioner consumed energy reduction amount and the ventilation apparatus consumed energy amount, is added to the outdoor temperature, the target space temperature, and the set temperature satisfy predetermined conditions. Due to this, it is possible to suppress the ventilation apparatus consumed energy amount during the outdoor air introducing operation from being greater than the air conditioner consumed energy reduction amount. Accordingly, it is possible to improve energy saving while securing comfort.

A controller for a ventilation apparatus according to a fourth aspect of the present invention, which performs heat load treatment for a target space along with an air conditioner by performing an outdoor air introducing operation where outdoor air is introduced, is provided with an information acquiring section, an energy amount calculating section, a correction value setting section, and an outdoor air introduction determining section. The information acquiring section acquires information on outdoor temperature, target space temperature in the target space, and set temperature of the air conditioner. The energy amount calculating section calculates an air conditioner consumed energy reduction amount, which is the amount of energy consumed in the air conditioner which is reduced by performing the outdoor air introducing operation, and a ventilation apparatus consumed energy amount which is consumed by the ventilation apparatus. The correction value setting section sets a correction value based on the outdoor temperature, the target space temperature, the air conditioner consumed energy reduction amount, and the ventilation apparatus consumed energy amount. The outdoor air introduction determining section determines that the outdoor air introducing operation is to be performed in a case where a value where the correction value is added to the outdoor temperature, the target space temperature, and the set temperature satisfy predetermined conditions.

In the controller for a ventilation apparatus according to the fourth aspect of the present invention, the correction value setting section sets the correction value based on the outdoor temperature, the target space temperature, the air conditioner consumed energy reduction amount, and the ventilation apparatus consumed energy amount, and the outdoor air introduction determining section determines that the outdoor air introducing operation is to be performed in a case where the value where the correction value is added to the outdoor temperature, the target space temperature, and the set temperature satisfy predetermined conditions. Due to this, it is possible to suppress the ventilation apparatus consumed energy amount during the outdoor air introducing operation from being greater than the air conditioner consumed energy reduction amount. Accordingly, it is possible to improve energy saving while securing comfort.

A controller for a ventilation apparatus according to a fifth aspect of the present invention is the controller for a ventilation apparatus according to the fourth aspect of the present invention, where the information acquiring section also acquires information on outdoor humidity and target space humidity in the target space. The correction value setting section sets the correction value based on the outdoor temperature, the target space temperature, the outdoor humidity, the target space humidity, the air conditioner consumed energy reduction amount, and the ventilation apparatus consumed energy amount.

In the controller for a ventilation apparatus according to the fifth aspect of the present invention, the correction value setting section sets the correction value based on the outdoor temperature, the target space temperature, the outdoor humidity, the target space humidity, the air conditioner consumed energy reduction amount, and the ventilation apparatus consumed energy amount. Due to this, it is possible to set the correction value with greater precision. As such, it is possible to further suppress the ventilation apparatus consumed energy amount during the outdoor air introducing operation from being greater than the air conditioner consumed energy reduction amount.

A controller for a ventilation apparatus according to a sixth aspect of the present invention is the controller for a ventilation apparatus according to any of the first, second, fourth, or fifth aspects, which is further provided with a heat load calculating section which calculates a heat load in the target space. The information acquiring section also acquires information on efficiency of energy consumed in the air conditioner. The energy amount calculating section calculates the air conditioner consumed energy reduction amount based on the heat load and efficiency of energy consumed in the air conditioner.

In the controller for a ventilation apparatus according to the sixth aspect of the present invention, the energy amount calculating section calculates the air conditioner consumed energy reduction amount based on the heat load and efficiency of energy consumed in the air conditioner. Due to this, it is possible to calculate the air conditioner consumed energy reduction amount with greater precision.

Here, efficiency of energy consumed is a value where the capacity of a device is divided by the amount of energy consumed. In addition, the capacity of a device is the capacity for heat load treatment of, for example, an air conditioner and is expressed in the unit of watts or the like. In addition, the amount of energy consumed is an amount of power consumed by, for example, a compressor and is expressed in the unit of watts or the like.

A controller for a ventilation apparatus according to a seventh aspect of the present invention is the controller for a ventilation apparatus according to any of the second or fifth aspects, which is further provided with a specific enthalpy difference calculating section and a heat load calculating section. The information acquiring section also acquires information on the ventilation air flow amount in the ventilation apparatus, the specific gravity of the air in the target space, and efficiency of energy consumed in the air conditioner. The specific enthalpy difference calculating section calculates a specific enthalpy difference between outdoor air and air in the target space based on the outdoor temperature, the target space temperature, the outdoor humidity, and the target space humidity. The heat load calculating section calculates the heat load in the target space based on the specific enthalpy difference, the ventilation air flow amount, and the specific gravity of the air in the target space. The energy amount calculating section calculates the air conditioner consumed energy reduction amount based on the heat load and efficiency of energy consumed in the air conditioner.

In the controller for a ventilation apparatus according to the seventh aspect of the present invention, the energy amount calculating section calculates the air conditioner consumed energy reduction amount based on the heat load, which is calculated based on the specific enthalpy difference between the outdoor air and the air in the target space, and efficiency of energy consumed in the air conditioner. Due to this, it is possible to calculate the air conditioner consumed energy reduction amount with greater precision.

<Effects of the Invention>

In the controller for a ventilation apparatus according to the first aspect to the seventh aspect of the present invention, it is possible to suppress the ventilation apparatus consumed energy amount during the outdoor air introducing operation from being greater than the air conditioner consumed energy reduction amount, and it is possible to improve energy saving while securing comfort.

BRIEF DESCRIPTION OF THE DRAWINGS

[Fig. 1] Fig. 1 is an overall configuration diagram of an air conditioning system which uses a controller for a ventilation apparatus according to an embodiment of the present invention.
[Fig. 2] Fig. 2 is a schematic diagram illustrating an outline configuration of a ventilation apparatus in a case where heat exchange ventilation is performed.
[Fig. 3] Fig. 3 is a schematic diagram illustrating an outline configuration of a ventilation apparatus in a case where normal ventilation is performed.
[Fig. 4] Fig. 4 is an outline configuration diagram of a total heat exchanger.
[Fig. 5] Fig. 5 is an outline configuration diagram of a controller for a ventilation apparatus according to an embodiment of the present invention.
[Fig. 6] Fig. 6 is a schematic diagram of a table for determining whether or not to carry out outdoor air cooling.
[Fig. 7] Fig. 7 is a schematic diagram of a table for determining whether or not to carry out outdoor air heating.
[Fig. 8] Fig. 8 is a flow chart illustrating the flow of processes by a controller in an outdoor air cooling mode.
[Fig. 9] Fig. 9 is a flow chart illustrating the flow of processes by a controller in an outdoor air heating mode.

## DESCRIPTION OF EMBODIMENTS

An embodiment of the present invention will be described below with reference the drawings. Here, the embodiment below is a specific example of the present invention and does not limit the technical scope of the present invention.

(1) Air Conditioning System 1

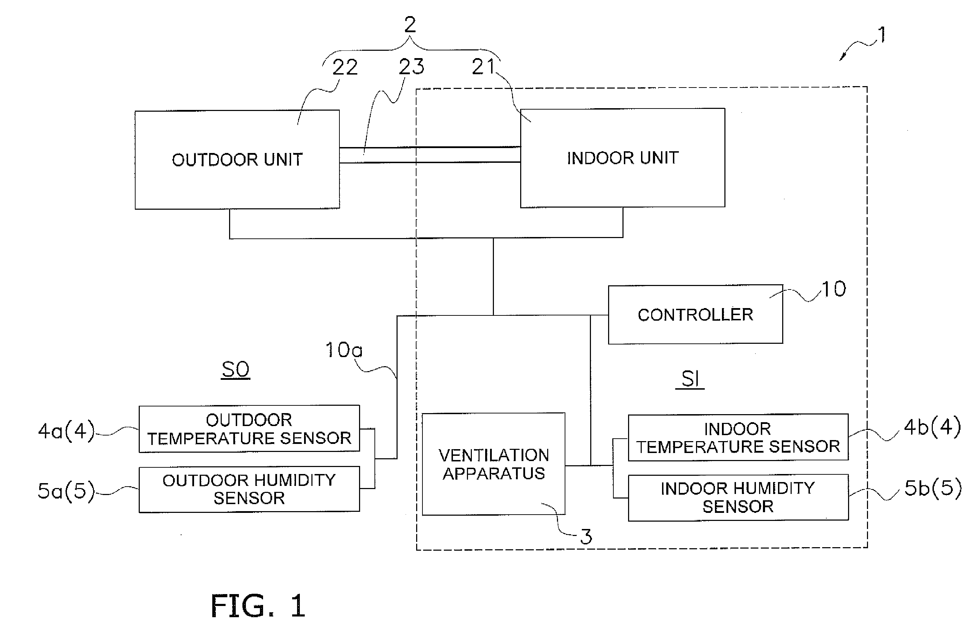

Fig. 1 is an overall configuration diagram of an air conditioning system 1. The air conditioning system 1 is a system where an air conditioner 2 and a ventilation apparatus 3 are driven individually or both at the same time and where comfortable air conditioning is realized in an indoor space SI while securing energy saving. The air conditioning system 1 is mainly configured from the air conditioner 2, the ventilation apparatus 3, a temperature sensor 4, a humidity sensor 5, and a controller 10 which is connected to these devices via a communication line 10a.

(1-1) Air Conditioner 2

The air conditioner 2 is an apparatus which performs heat load treatment for the indoor space SI due to a refrigerating cycle such that indoor temperature IT reaches set temperature SP which is set by a user. The air conditioner 2 has operation modes such as a cooling mode, a heating mode, and a standby mode, and the operation mode is selected based on an instruction from a user or controlling by the controller 10. In detail, the air conditioner 2 cools indoor air IA in the indoor space SI in the cooling mode and heats the indoor air IA in the indoor space SI in the heating mode. In addition, the air conditioner 2 is to be a standby state where power consumption is suppressed and driving is halted in the standby mode.

The air conditioner 2 is mainly configured from an indoor unit 21 and an outdoor unit 22. The indoor unit 21 is attached to an inner wall in the vicinity of the ceiling of the indoor space SI. The indoor unit 21 has an indoor fan, an indoor heat exchanger, and the like (which are omitted from the drawings). The outdoor unit 22 is installed in an outdoor space SO. The outdoor unit 22 has an outdoor fan, an outdoor heat exchanger, a compressor, and the like (which are omitted from the drawings). The indoor unit 21 and the outdoor unit 22 are connected via a refrigerant pipe 23 and form a refrigerant circuit.

Air conditioner electrical component units (which are omitted from the drawings) are disposed in inner sections of each of the indoor unit 21 and the outdoor unit 22. The air conditioner electrical component units are connected with the controller 10 or an input device (which is omitted from the drawings) such as a remote controller via the communication line 10a or the like. The air conditioner electrical component units control driving of the indoor unit 21 and the outdoor unit 22 based on control signals which are sent from the controller 10, signals which are input by a user via the input device, and the like.

(1-2) Ventilation Apparatus 3

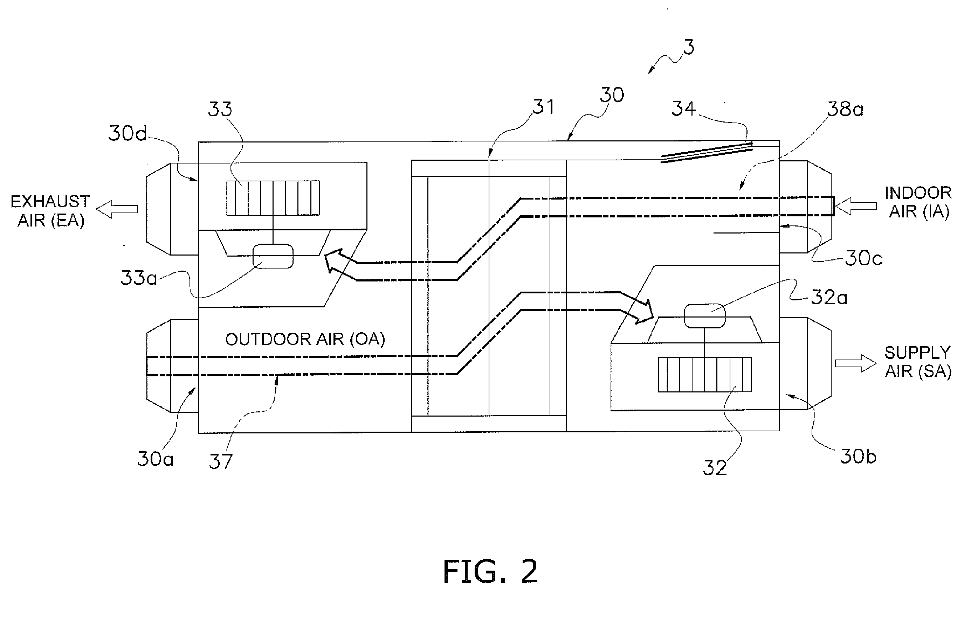

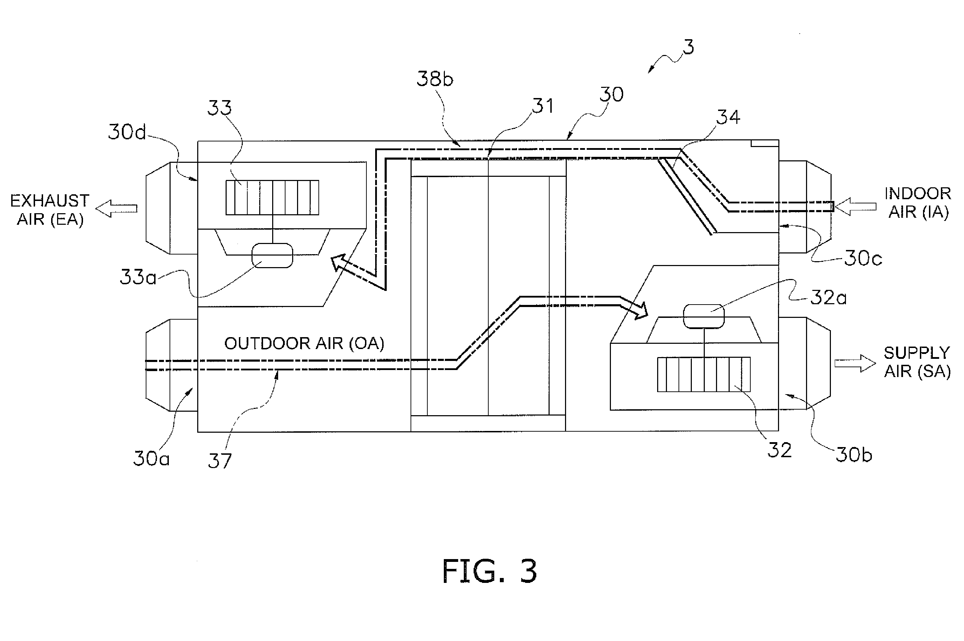

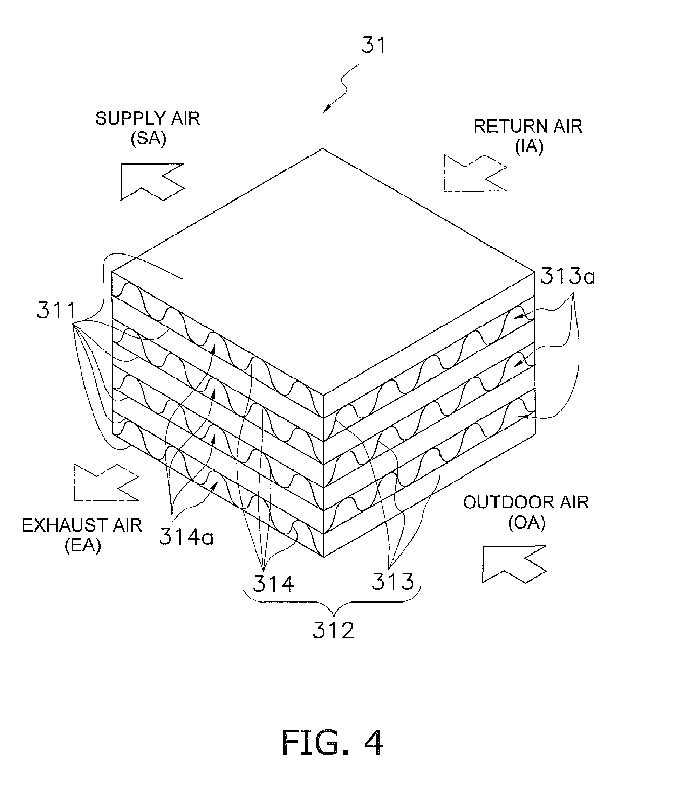

The ventilation apparatus 3 will be described below with reference to Fig. 2 to Fig. 4. Fig. 2 is a schematic diagram illustrating an outline configuration of the ventilation apparatus 3 in a case where heat exchange ventilation is performed. Fig. 3 is a schematic diagram illustrating an outline configuration of the ventilation apparatus 3 in a case where normal ventilation is performed. Fig. 4 is an outline configuration diagram of a total heat exchanger 31 of the ventilation apparatus 3.

The ventilation apparatus 3 is an apparatus which performs ventilation of the indoor space SI. The ventilation apparatus 3 has driving modes such as a heat exchange ventilation mode where the total heat exchanger 31 is used and a normal ventilation mode where the total heat exchanger 31 is not used. The ventilation apparatus 3 operates together with or independently from the air conditioner 2. Normally, the ventilation apparatus 3 is set so as to be driven in the heat exchange ventilation mode when the air conditioner 2 is driven in the cooling mode or the heating mode. The ventilation apparatus 3 is set so as to be driven in the normal ventilation mode when the air conditioner 2 is in the standby mode. Here, switching of the driving mode is not limited to this, and it is possible for a user to arbitrarily switch via the input device (which is omitted from the drawings).

The ventilation apparatus 3 is arranged in the indoor space SI behind the ceiling or on a wall. The contours of the ventilation apparatus 3 are configured by a casing 30 which has a box shape which is substantially rectangular (refer to Fig. 2 and Fig. 3). An introduction opening 30a for introducing air from the outdoor space SO to the inside of the casing 30 as outdoor air OA, an air supply opening 30b which supplies the outdoor air OA as supply air SA to the indoors, an air return opening 30c for taking the indoor air (return air) IA in the indoor space SI from indoors to the inside of the casing 30, and an air exhaust opening 30d for discharging the indoor air (return air) IA to the outside as exhaust air EA are formed in the casing 30 (refer to Fig. 2 and Fig 3). In addition, an air supply flow path 37 which links the introduction opening 30a and the air supply opening 30b and a first exhaust air flow path 38a (refer to Fig. 2) and a second exhaust air flow path 38b (refer to Fig. 3) (the first exhaust air flow path 38a and the second exhaust air flow path 38b are referred to below in combination as an exhaust air flow path 38) which link the air return opening 30c and the air exhaust opening 30d are formed inside the casing 30.

The total heat exchanger 31, an air supply fan 32, an air exhaust fan 33, a damper 34, and a ventilation apparatus electrical component unit (which is omitted from the drawings) are disposed inside the casing 30 as the main components.

(1-2-1) Total Heat Exchanger 31

The total heat exchanger 31 is disposed at the center section inside the casing 30 such that the air supply flow path 37 and the first exhaust air flow path 38a pass through (refer to Fig. 2). The total heat exchanger 31 performs heat exchange between the outdoor air OA and the exhaust air EA in a case where the ventilation apparatus 3 is driven in the heat exchange ventilation mode. The total heat exchanger 31 mainly has a plurality of total heat exchange elements 311 and a plurality of corrugated sheet members 312 (refer to Fig. 4).

The total heat exchange elements 311 are members with a flat plate shape which have heat transferability and moisture permeability such as paper. A large number of the total heat exchange elements 311 are layered in the up and down direction with a predetermined gap.

The corrugated sheet members 312 are members which have a corrugated sheet shape. The corrugated sheet members 312 are disposed alternately with the total heat exchange elements 311 in a layering direction of the total heat exchange elements 311. The corrugated sheet members 312 have first corrugated sheet members 313, which form first air flow paths 313a where the outdoor air OA flows due to the total heat exchange elements 311 being in contact with the top and bottom ends of the first corrugated sheet members 313. Also, the corrugated sheet members 312 have second corrugated sheet members 314 which form second air flow paths 314a where the exhaust air EA flows due to the total heat exchange elements 311 being in contact with the top and bottom ends of the second corrugated sheet members 314. Then, the first corrugated sheet members 313 and the second corrugated sheet members 314 are arranged alternately in the layering direction of the total heat exchange elements 311 so as to interpose the total heat exchange elements 311. In addition, the first corrugated sheet members 313 and the second corrugated sheet members 314 are arranged such that the first air flow paths 313a and the second air flow paths 314a are orthogonal to each other. As such, it is possible to carry out heat exchange such that the outdoor air OA which flows through the first air flow paths 313a and the exhaust air EA which flows through the second air flow paths 314a do not mix with each other. Here, the first air flow paths 313a configure a portion of the air supply flow path 37. The second air flow paths 314a configure a portion of the first exhaust air flow path 38a.

(1-2-2) Air Supply Fan 32 and Air Exhaust Fan 33

The air supply fan 32 is a fan for generating air flow from the outdoor space SO toward the indoor space SI through the air supply flow path 37. The air supply fan 32 is arranged in the vicinity of the downstream end of the air supply flow path 37 (refer to Fig. 2 and Fig. 3). The air exhaust fan 33 is a fan for generating air flow from the indoor space SI toward the outdoor space SO through the exhaust air flow path 38. The air exhaust fan 33 is arranged in the vicinity of the downstream end of the exhaust air flow path 38 (refer to Fig. 2 and Fig. 3).

The air supply fan 32 rotates due to an air supply fan motor 32a being operated. The air exhaust fan 33 rotates due to an air exhaust fan motor 33a being operated. Here, the air supply fan motor 32a and the air exhaust fan motor 33a are controlled by the ventilation apparatus electrical component units. It is possible to adjust a set air flow amount Q of the air supply fan 32 and the air exhaust fan 33 by switching the rotation speeds in a stepwise manner using inverter control.

(1-2-3) Damper 34

The damper 34 is disposed in the vicinity of the air return opening 30c inside the casing 30. The first exhaust air flow path 38a and the second exhaust air flow path 38b are switched due to the damper 34 being opened and closed (refer to Fig. 2 and Fig. 3). In detail, the first exhaust air flow path 38a which passes through the total heat exchanger 31 is open in a state where the damper 34 is open (refer to Fig. 2). The second exhaust air flow path 38b which is separated from the total heat exchanger 31 is open in a state where the damper 34 is closed (refer to Fig. 3). That is, it is possible for the ventilation apparatus 3 to switch between heat exchange ventilation (ventilation where heat exchange is carried out between the outdoor air OA and the exhaust air EA) and normal ventilation (ventilation where heat exchange is not carried out between the outdoor air OA and the exhaust air EA) by opening and closing the damper 34. The ventilation apparatus 3 performs heat exchange ventilation due to the damper 34 being open in the heat exchange ventilation mode. The ventilation apparatus 3 performs normal ventilation due to the damper 34 being closed in the normal ventilation mode. Here, opening and closing of the damper 34 is performed by operating a damper driving motor (which is not shown in the drawings). The damper driving motor is controlled by the ventilation apparatus electrical component units.

(1-3) Temperature Sensor 4 and Humidity Sensor 5

The temperature sensor 4 is configured from an outdoor temperature sensor 4a which detects the outdoor temperature OT and an indoor temperature sensor 4b which detects the indoor temperature IT. In addition, the humidity sensor 5 is configured from an outdoor humidity sensor 5a which detects outdoor humidity OX and an indoor humidity sensor 5b which detects indoor humidity IX. The outdoor temperature sensor 4a and the outdoor humidity sensor 5a are installed in the outdoor space SO (refer to Fig. 1). The indoor temperature sensor 4b and the indoor humidity sensor 5b are installed in the indoor space SI. The temperature sensor 4 and the humidity sensor 5 each have a communication section (which is not shown in the drawings), information on the outdoor temperature OT, the indoor temperature IT, the outdoor humidity OX, and the indoor humidity IX is appropriately sent to the controller 10 which is connected via the communication line 10a. Here, the temperature sensor 4 need not necessarily be disposed in the indoor space SI or the outdoor space SO and may be built into the ventilation apparatus 3.

(1-4) Controller 10

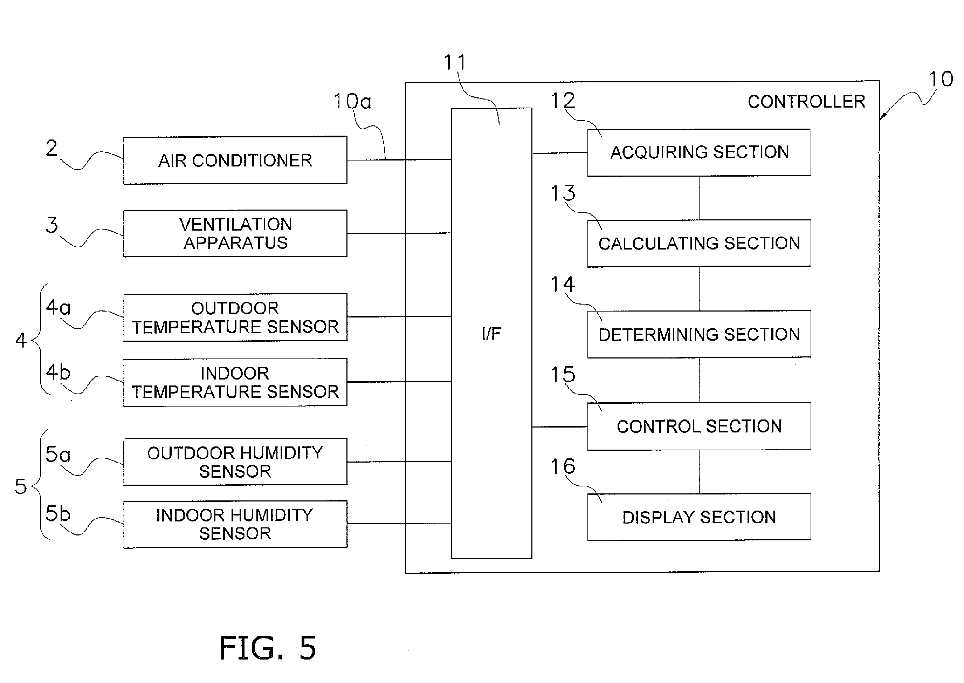

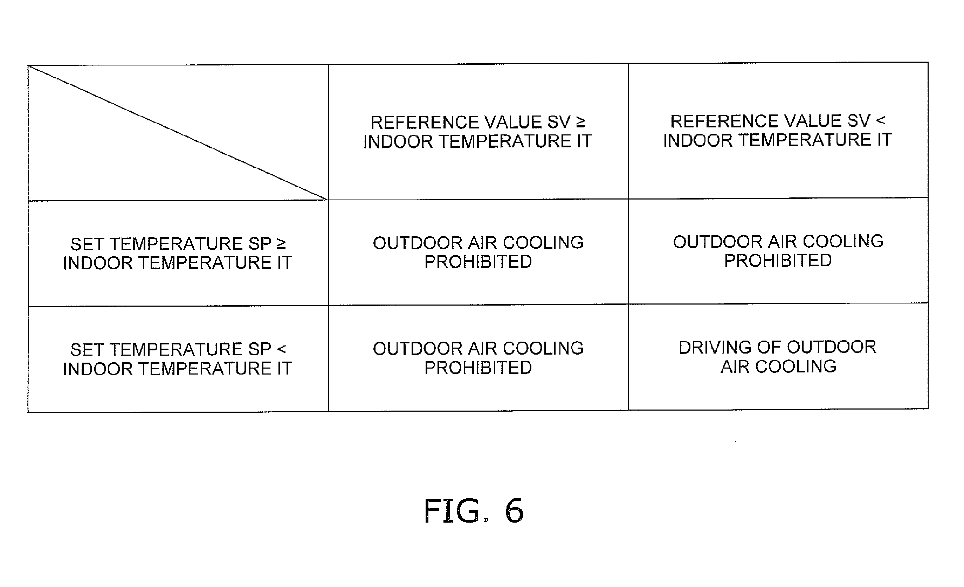

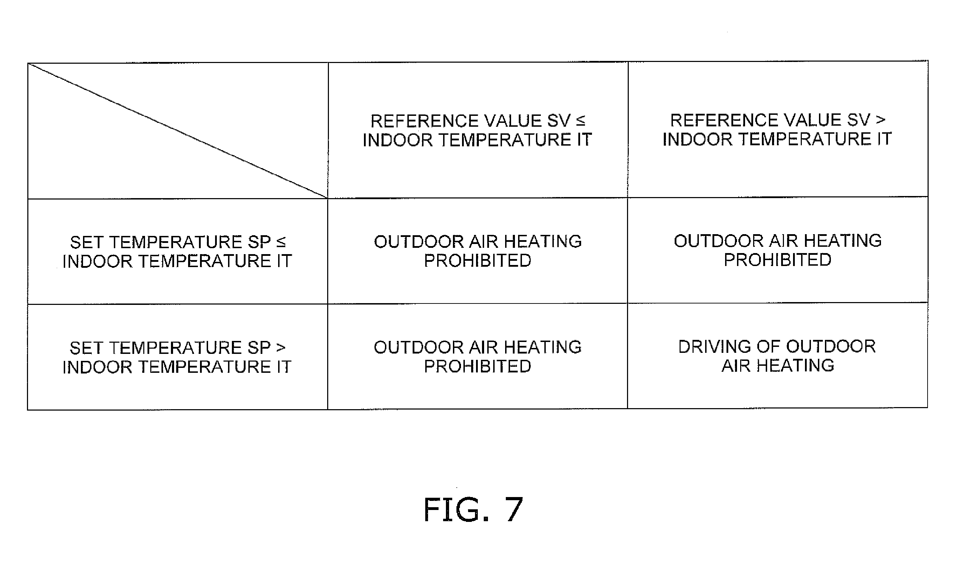

The controller 10 will be described below with reference to Fig. 1 and Fig. 5 to Fig. 7. Fig. 5 is a diagram illustrating the outline configuration of the controller 10. Fig. 6 is a schematic diagram of a table for determining whether or not to carry out outdoor air cooling. Fig. 7 is a schematic diagram of a table for determining whether or not to carry out outdoor air heating. Here, outdoor air cooling or outdoor air heating is performing cooling or heating of the indoor space SI by introducing the outdoor air OA into the indoor space SI.

The controller 10 is configured by a micro computer or the like which consists of a CPU, memory, and the like. The controller 10 is provided in the indoor space SI. The controller 10 is connected with the air conditioner 2, the ventilation apparatus 3, the temperature sensors 4a and 4b, and the humidity sensors 5a and 5b via the communication line 10a and performs sending and receiving of information with these devices.

The controller 10 has control modes such as an outdoor air cooling mode and an outdoor air heating mode. The controller 10 performs controlling of the air conditioner 2 and the ventilation apparatus 3 according to each control mode. In detail, the outdoor air cooling mode is selected in a case where the air conditioner 2 is driven in the cooling mode. The outdoor air heating mode is selected in a case where the air conditioner 2 is driven in the heating mode. In a case where the outdoor air cooling mode or the outdoor air heating mode is selected, the controller 10 performs controlling which switches the air conditioner 2 from the cooling mode or the heating mode to the standby mode and switches the ventilation apparatus 3 from the heat exchange ventilation mode to the normal ventilation mode with predetermined conditions being satisfied as the impetus, and performs controlling which switches the air conditioner 2 from the standby mode to the cooling mode or the heating mode and switches the ventilation apparatus 3 from the normal ventilation mode to the heat exchange ventilation mode with predetermined conditions not being satisfied as the impetus.

The controller 10 has an interface 11, an acquiring section 12, a calculating section 13, a determining section 14, a control section 15, and a display section 16 (refer to Fig. 5).

(1-4-1) Acquiring Section 12

The acquiring section 12 receives and holds information which is sent from the air conditioner 2, the ventilation apparatus 3, the temperature sensor 4, the humidity sensor 5, and the like via the interface 11. In detail, the acquiring section 12 receives driving state information (information such as power ON/OFF, the driving mode, the set temperature SP, and the set air flow amount Q) from the air conditioner 2 and the ventilation apparatus 3, receives information on the outdoor temperature OT and the indoor temperature IT from the temperature sensor 4, and receives information on the outdoor humidity OX and the indoor humidity IX from the humidity sensor 5. The acquiring section 12 holds the information respectively in predetermined memory regions. In addition, the acquiring section 12 respectively holds the information on the COP of the air conditioner 2 and specific gravity p of the indoor air IA which are set in advance based on statistics, estimates, and the like in the predetermined memory regions. The acquiring section 12 appropriately outputs the respective information described above which is held to the calculating section 13 and the determining section 14.

(1-4-2) Calculating Section 13

The calculating section 13 calculates each type of numerical values based on the information which is output from the acquiring section 12 and equations which are held in advance in the predetermined memory regions. In detail, the calculating section 13 calculates a correction value $\Delta T$ based on the outdoor temperature OT, the indoor temperature IT, the outdoor humidity OX, the indoor humidity IX, a specific enthalpy difference $\Delta h$ [kJ/kg] between the outdoor air OA and the inside air IA, the set air flow amount Q [m³/h] of the ventilation apparatus 3, the specific gravity p [kg/m³] of the indoor air IA, a heat load PFC of the indoor space SI, the COP of the air conditioner 2, an air conditioner consumed power reduction amount $\Delta AE$ which is reduced by switching the air conditioner 2 from the cooling mode or the heating mode to the standby mode, and a ventilation apparatus consumed power amount $\Delta VE$ which is held in advance in the calculating section 13 which is set according to the set air flow amount Q. Here, it is assumed that the correction value $\Delta T$ is calculated as, in detail, between 1 to 4°C, but is not limited to this numerical value range and may be a numerical value which is different.

The calculating section 13 calculates a reference value SV based on the correction value $\Delta T$ and the outdoor temperature OT. The reference value SV is a value which is referenced when the determining section 14, which will be described later, is determining whether or not outdoor air cooling or outdoor air heating is to be performed.

In more detail, the correction value $\Delta T$ is calculated based on equation A below. The reference value SV is calculated based on equation B below.

$$\Delta T > \{VE - (0.2778 \times Q \times \rho / COP) \times (2501 + 1.805\ OT) \times (IX - OX)\} /$$
$$\{(0.2778 \times Q \times \rho / COP) \times (1.006 + 1.805\ IX)\}$$

$$(\text{equation A})$$

$$SV = OT + \Delta T \qquad\qquad\qquad (\text{equation B})$$

Then, the reference value SV which is calculated is sent to the determining section 14 as appropriate.

Here, equation A is derived from the considerations below.

With the condition that

$$\Delta AE - \Delta VE > 0,$$

and since

$$\Delta AE = PFC / COP,$$

$$PFC / COP - \Delta VE > 0$$

and since

$$PFC = 0.2778 \times \Delta h \times Q \times \rho,$$

this leads to

$$0.2778 \times \Delta h \times Q \times \rho / COP - \Delta VE > 0 \qquad\qquad (\text{equation}$$
$$C).$$

Here, with

$$\Delta T = IT - OT,$$

and since

$$IT = OT + \Delta T,$$

$$\Delta h = 1.006 \, (OT + \Delta T) + \{2501 + 1.805 \, (OT + \Delta T)\} \, IX - \{1.006 \, OT + (2501 + 1.805 \, OT) \, OX\},$$

and when this is developed, this leads to

$$\Delta h = (1.006 + 1.805 \, IX) \, \Delta T + (2501 + 1.805 \, OT) \times (IX - OX) \qquad \text{(equation D)}.$$

Then, when substituting equation C into equation D,

$$(0.2778 \times Q \times \rho / COP) \times \{(1.006 + 1.805 \, IX) \, \Delta T + (2501 + 1.805 \, OT) \times (IX - OX)\} - \Delta VE > 0$$

and when this is developed,

$$(0.2778 \times Q \times \rho / COP) \times (1.006 + 1.805 \, IX) \, \Delta T > \Delta VE - (0.2778 \times Q \times \rho / COP) \times (2501 + 1.805 \, OT) \times (IX - OX),$$

and equation A is derived from this. Here, a constant 1.006 is constant pressure specific heat [kJ/kg] of dry air, a constant 2501 is evaporation latent heat [kJ/kg] of water at 0°C, a constant 1.805 is constant pressure specific heat [kJ/kg] of water vapor, and 0.2778 is a constant for converting to a unit [W].

(1-4-3) Determining Section 14

The determining section 14 holds a table for determining whether or not to carry out outdoor air cooling (refer to Fig. 6) and a table for determining whether or not to carry out outdoor air heating (refer to Fig. 7) in predetermined memory regions. The determining section 14 selects each table according to the control mode, and determines whether or not outdoor air cooling or outdoor air heating is to be carried out based on this.

In detail, the determining section 14 selects the table for determining whether or not outdoor air cooling is to be carried out in a case where the air conditioner 2 is driven in the cooling mode, determines that outdoor air cooling is to be started or continued when both the set temperature SP and the reference value SV are less than the indoor temperature IT, and determines that outdoor air cooling is not to be carried out or is to finish when any of the set temperature SP and the reference value SV is equal to or more than the indoor temperature IT.

In addition, the determining section 14 selects the table for determining whether or not to carry out outdoor air heating in a case where the air conditioner 2 is driven in the heating mode, determines that outdoor air heating is to be started or continued when both the set temperature SP and the reference value SV are higher than the indoor temperature IT, and determines that outdoor air heating is not to be carried out or is to finish when any of the set temperature SP and the reference values SV is equal to or less than the indoor temperature IT.

Then, the determining section 14 appropriately outputs the determination result described above to the control section 15.

(1-4-4) Control Section 15

The control section 15 generates control commands based on the determination result from the determining section 14 and sends the control commands to the air conditioner 2 and the ventilation apparatus 3. In detail, the control section 15 generates control commands for switching the air conditioner 2 to the standby mode and for switching the ventilation apparatus 3 to the normal ventilation mode in a case where the determining section 14 determines that outdoor air cooling or outdoor air heating is to be started. In addition, the control section 15 generates control commands for switching the air conditioner 2 to the cooling mode or the heating mode and for switching the ventilation apparatus 3 to the heat exchange ventilation mode in a case where the determining section 14 determines that outdoor air cooling or outdoor air heating is to finish. Then, the control section 15 sends the commands which are generated to the air conditioner 2 and the ventilation apparatus 3 via the interface 11. In addition, the control section 15 generates control commands and outputs the control commands to the display section 16 by generating display information which is displayed to a user.

(1-4-5) Display Section 16

The display section 16 is a liquid crystal display. The display section 16 displays display information (which is omitted from the drawings) which is output from the control section 15. For example, when executing outdoor air cooling or outdoor air heating, the display section 16 displays this as display information on the liquid crystal display.

(2) Flow of Processes by Controller 10

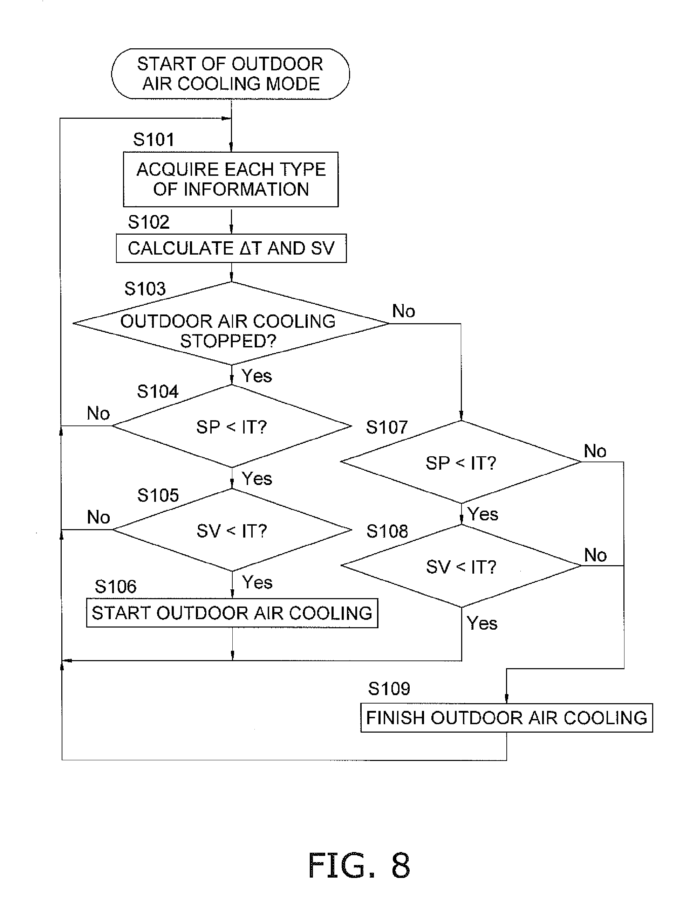

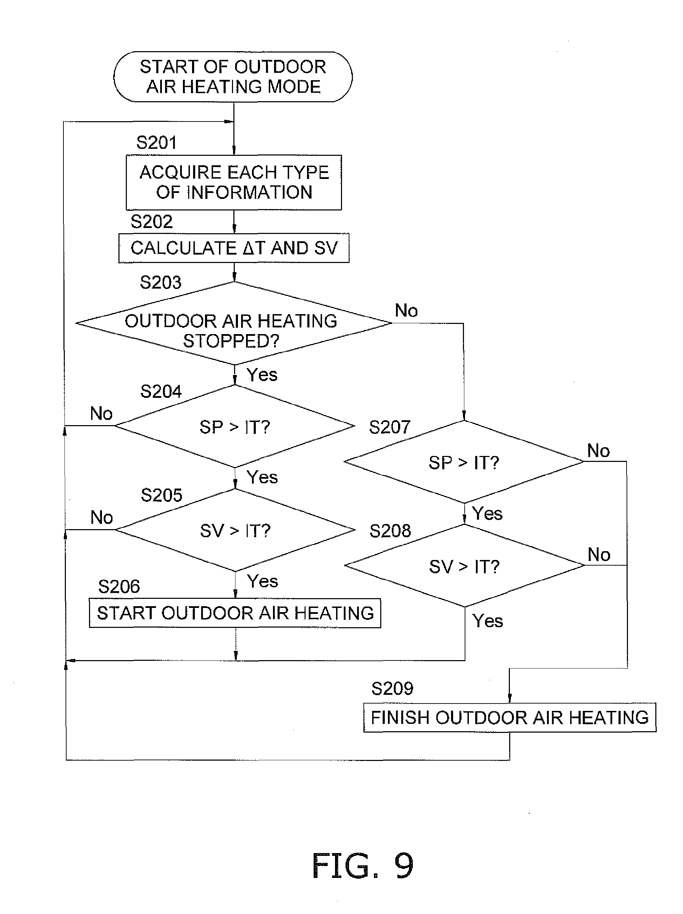

Examples of the flow of processes by the controller 10 will be described below with reference to Fig. 8 and Fig. 9 by being separated into the outdoor air cooling mode and the outdoor air heating mode. Fig. 8 is a flow chart illustrating the flow of the processes by the controller 10 in the outdoor air cooling mode. Fig. 9 is a flow chart illustrating the flow of the processes by the controller 10 in the outdoor air heating mode. Here, below is one example of the processes and the controller 10 may execute processes with a flow which is different to this.

(2-1) Flow of Processes in Outdoor Air Cooling Mode

The controller 10 performs processes with the flow as shown in Fig. 8 where the outdoor air cooling mode is selected in a case where the air conditioner 2 is driven in the cooling mode. That is, the acquiring section 12 acquires each type of information in step S101 when starting of driving of the air conditioner 2 in the cooling mode is first sent to the controller 10 via the communication line 10a. In detail, the acquiring section 12 acquires information on the set temperature SP from the air conditioner 2, acquires information on the set air flow amount Q from the ventilation apparatus 3, acquires information on the outdoor temperature OT and the indoor temperature IT from the temperature sensor 4, acquires information on the outdoor humidity OX and the indoor humidity IX from the humidity sensor 5, and holds each set of information in the respective predetermined memory regions.

Next, in step S102, the calculating section 13 calculates the correction value $\Delta T$ and the reference value SV.

Then, the determining section 14 determines the predetermined matters in step S103 to step S105. In detail, it is determined whether or not outdoor air cooling is not being executed in step S103, the flow advances to step S104 in a case where the determination in step S103 is YES (that is, in a case where outdoor air cooling is not being executed) and it is determined whether or not the set temperature SP of the air conditioner 2 is lower than the indoor temperature IT.

Next, in a case where the determination in step S104 is YES (that is, in a case where the set temperature SP is less than the indoor temperature IT), the flow advances to step S105, and it is determined whether or not the reference value SV is lower than the indoor temperature IT.

Then, in a case where the determination in step S105 is YES (that is, in a case where the reference value SV is less than the indoor temperature IT), the flow advances to step S106 and outdoor air cooling is started. In detail, the control section 15 generates a command, which switches the air conditioner 2 from the cooling mode to the standby mode, and sends the command to the air conditioner 2 and generates a command, which switches the ventilation apparatus 3 from the heat exchange ventilation mode to the normal ventilation mode, and sends the command to the ventilation apparatus 3. After the above processes are performed, the flow returns to step S101.

In addition, in a case where the determination in step S103 is NO (that is, in a case where outdoor air cooling is being executed), the flow advances to step S107 and the determining section 14 determines whether or not the set temperature SP is lower than the indoor temperature IT. Next, in a case where the determination in step S107 is YES (that is, in a case where the set temperature SP is less than the indoor temperature IT), the flow advances to step S108 and the determining section 14 determines whether or not the reference value SV is lower than the indoor temperature IT. Then, in a case where the determination in step S108 is YES (that is, in a case where the reference value SV is less than the indoor temperature IT), outdoor air cooling is continued and the flow returns to step S101.

In addition, in a case where the determination in step S107 is NO (that is, in a case where the set temperature SP is equal to or more than the indoor temperature IT) and in a case where the determination in step S108 is NO (that is, in a case where the reference value SV is equal to or more than the indoor temperature IT), the flow advances to step S109 and outdoor air cooling is finished. In detail, the control section 15 generates a command, which switches the air conditioner 2 from the standby mode to the cooling mode, and sends the command to the air conditioner 2 and generates a command, which switches the ventilation apparatus 3 from the normal ventilation mode to the heat exchange ventilation mode, and sends the command to the ventilation apparatus 3. Then, after this, the flow returns to step S101.

The controller 10 repeats the processes described above during operation of the air conditioner 2 in the cooling mode (or the standby mode).

(2-2) Flow of Processes in Outdoor Air Heating Mode

The controller 10 performs processes with the flow as shown in Fig. 9 where the outdoor air heating mode is selected in a case where the air conditioner 2 is driven in the heating mode. Here, since the processes in step S201 and step S202 are the same as the processes in step S101 and step S102 in the outdoor air cooling mode, description is omitted.

In the outdoor air heating mode, after the processes in step S201 and step S202 are performed, the determining section 14 determines the predetermined matters in step S203 to step S205. In detail, it is determined whether or not outdoor air heating is not being executed in step S203, the flow advances to step S204 in a case where the determination in S203 is YES (that is, in a case where outdoor air heating is not being executed) and it is determined whether or not the set temperature SP of the air conditioner 2 is higher than the indoor temperature IT.

Next, in a case where the determination in step S204 is YES (that is, in a case where the set temperature SP is higher than the indoor temperature IT), the flow advances to step S205 and it is determined whether or not the reference value SV is higher than the indoor temperature IT.

Then, in a case where the determination in step S205 is YES (that is, in a case where the reference value SV is higher than the indoor temperature IT), the flow advances to step S206 and outdoor air heating is started. In detail, the control section 15 generates a command, which switches the air conditioner 2 from the heating mode to the standby mode, and sends the command to the air conditioner 2 and generates a command, which switches the ventilation apparatus 3 from the heat exchange ventilation mode to the normal ventilation mode, and sends the command to the ventilation apparatus 3. After the above processes are performed, the flow returns to step S201.

In addition, in a case where the determination in step S203 is NO (that is, in a case where outdoor air heating is being executed), the flow advances to step S207 and the determining section 14 determines whether or not the set temperature SP is higher than the indoor temperature IT. Next, in a case where the determination in step S207 is YES (that is, in a case where the set temperature SP is higher than the indoor temperature IT), the flow advances to step S208 and the determining section 14 determines whether or not the reference value SV is higher than the indoor temperature IT. Then, in a case where the determination in step S208 is YES (that is, in a case where the reference value SV is higher than the indoor temperature IT), outdoor air heating is continued and the flow returns to step S201.

In addition, in a case where the determination in step S207 is NO (that is, in a case where the set temperature SP is equal to or less than the indoor temperature IT) and in a case where the determination in step S208 is NO (that is, in a case where the reference value SV is equal to or less than the indoor temperature IT), the flow advances to step S209 and outdoor air heating is stopped. In detail, the control section 15 generates a command, which switches the air conditioner 2 from the standby mode to the heating mode, and sends the command to the air conditioner 2 and generates a command, which switches the ventilation apparatus 3 from the normal ventilation mode to the heat exchange ventilation mode, and sends the command to the ventilation apparatus 3. Then, after this, the flow returns to step S201.

The controller 10 repeats the flow described above during operation of the air conditioner 2 in the heating mode (or the standby mode).

(3) Characteristics

(3-1)

In the embodiment described above, the determining section 14 determines that outdoor air cooling or outdoor air heating is to be performed when the air conditioner consumed power reduction amount ΔAE is greater than the ventilation apparatus consumed power amount ΔVE in a case where the outdoor temperature OT, the indoor temperature IT, the set temperature SP, the outdoor humidity OX, and the inside air IX satisfy predetermined conditions. Due to this, it is possible to suppress the ventilation apparatus consumed power amount ΔVE during outdoor air cooling or outdoor air heating from being greater than the air conditioner consumed power reduction amount ΔAE.

(3-2)

In the embodiment described above, the determining section 14 determines that outdoor air cooling or outdoor air heating is to be performed in a case where a value where the correction value ΔT is added to the outdoor temperature OT, the indoor temperature IT, and the set temperature SP satisfy predetermined conditions. Due to this, it is possible to suppress the ventilation apparatus consumed power amount ΔVE during outdoor air cooling or outdoor air heating from being greater than the air conditioner consumed power reduction amount ΔAE with high precision.

(3-3)

In the embodiment described above, the calculating section 13 calculates the correction value ∆T based on the outdoor temperature OT, the indoor temperature IT, the outdoor humidity OX, the indoor humidity IX, the air conditioner consumed power reduction amount ∆AE, and the ventilation apparatus consumed power amount ∆VE. Due to this, it is possible to calculate the correction value ∆T with precision, and it is possible to suppress the ventilation apparatus consumed power amount ∆VE during outdoor air cooling or outdoor air heating from being greater than the air conditioner consumed power reduction amount ∆AE with high precision.

(3-4)

In the embodiment described above, the calculating section 13 calculates the air conditioner consumed power reduction amount ∆AE based on the heat load PFC of the indoor space SI and the COP of the air conditioner 2. Due to this, it is possible to calculate the air conditioner consumed power reduction amount ∆AE with precision, and it is possible to suppress the ventilation apparatus consumed power amount ∆VE during outdoor air cooling or outdoor air heating from being greater than the air conditioner consumed power reduction amount ∆AE with high precision.

(3-5)

In the embodiment described above, the calculating section 13 calculates the heat load PFC of the indoor space SI based on the specific enthalpy difference ∆h between the outdoor air OA and the indoor air IA, the ventilation air flow amount Q in the ventilation apparatus 3, and the specific gravity p of the indoor air IA. Due to this, it is possible to calculate the heat load PFC of the indoor space SI with precision, and it is possible to suppress the ventilation apparatus consumed power amount ∆VE during outdoor air cooling or outdoor air heating from being greater than the air conditioner consumed power reduction amount ∆AE with high precision.

(4) Modified Examples

(4-1) Modified Example 1A

In the embodiment described above, the air conditioning system 1 individually has the air conditioner 2, the ventilation apparatus 3, the temperature sensor 4, and the humidity sensor 5, but is not limited to this. For example, any of the temperature sensor 4 and the humidity sensor 5 may be arranged into the ventilation apparatus 3. In addition, any of the ventilation apparatus 3, the indoor temperature sensor 4b, and the indoor humidity sensor 5b may be arranged into the indoor unit 21. In addition, any of the outdoor temperature sensor 4a and the outdoor humidity sensor 5a may be arranged into the outdoor unit 22. In addition, there may be a plurality of each of the air conditioner 2, the ventilation apparatus 3, the temperature sensor 4, and the humidity sensor 5.

(4-2) Modified Example 1 B

In the embodiment described above, the total heat exchanger 31 is disposed in the ventilation apparatus 3, but is not limited to this. For example, a sensible heat exchanger may be used in place of the total heat exchanger 31. In addition, the ventilation apparatus 3 may be driven only in the normal ventilation mode and there may be a configuration where the total heat exchanger 31 is omitted.

(4-3) Modified Example 1C

In the embodiment described above, the controller 10 is disposed inside the indoor space SI, but is not limited to this. For example, the controller 10 may be installed at a remote site or the like which is joined to devices such as the air conditioner 2 and the ventilation apparatus 3 using a network such as a wireless LAN or the Internet. In addition, the controller 10 may be arranged into an inner section of the air conditioner 2 or the ventilation apparatus 3.

(4-4) Modified Example 1 D

In the embodiment described above, the controller 10 has control modes such as the outdoor air cooling mode and the outdoor air heating mode, but is not limited to this. For example, any one of the outdoor air cooling mode or the outdoor air heating mode may be omitted.

(4-5) Modified Example 1 E

In the embodiment described above, the calculating section 13 holds equations A to E and the like and the determining section 14 holds tables for determining and the like, but is not limited to this. For example, there may be a configuration where a memory section is separately provided and stores the equations A to E, the tables for determining, and the like and information which is necessary is appropriately taken out from the memory section. In this case, the memory section may be installed at a remote site or the like which is joined to the controller 10 using a network.

(4-6) Modified Example 1 F

In the embodiment described above, the outdoor humidity OX and the indoor humidity IX are acquired from the humidity sensor 5, but are not limited to this. For example, the outdoor humidity OX and the indoor humidity IX may be numerical values which are estimated in advance and held by the acquiring section 12.

(4-7) Modified Example 1G

In the embodiment described above, the COP of the air conditioner 2 and the specific gravity p of the indoor air IA are numerical values that are set in advance and held by the acquiring section 12, but are not limited to this. For example, these values may be calculated by the calculating section 13 by a fixed cycle.

(4-8) Modified Example 1 H

In the embodiment described above, the correction value ∆T is calculated based on each type of information, but is not limited to this. For example, the correction value ∆T may be calculated based on the outdoor temperature OT, the indoor temperature IT, the ventilation apparatus consumed power amount ∆VE, and the air conditioner consumed power reduction amount ∆AE without the outdoor humidity OX and the indoor humidity IX being considered.
In addition, in the embodiment described above, the correction value ∆T is calculated in real time, but is not limited to this. For example, the correction value ∆T which is set in advance based on simulation or the like may be held by the acquiring section 12 or the calculating section 13.
In addition, in the embodiment described above, the correction value ∆T is calculated based on equation A, but may instead be simply calculated based on equation E below.

$$\Delta T = \Delta VE \times COP / (0.2795 \times (1 + 1.794\ IX) \times Q \times \rho)\qquad\text{(equation E)}$$

Here, equation E is derived from equation F below on the premise that OX ≒ IX and IT - OT = ∆T.

$$\Delta AE = (0.2795 \times (1 + 1.794\ IX) \times Q \times \rho / COP) \times \Delta T\qquad\text{(equation F)}$$

The outdoor humidity OX need not be detected in a case where the correction value ∆T is calculated using equation E in this manner.

(4-9) Modified Example 1I

In the embodiment described above, the reference value SV is calculated based on equation E, but is not limited to this. For example, the reference value SV may be calculated based on equation G below which takes heat loss α or the like, which occurs inside the ventilation apparatus 3, into consideration in addition to the set air flow amount Q.

$$SV = OT + \Delta T + \alpha \qquad\text{(equation G)}$$

(4-10) Modified Example 1J

In the embodiment described above, the determining section 14 determines whether or not outdoor air cooling or outdoor air heating are to be carried out using the reference value SV, the set temperature SP, and the indoor temperature IT, but is not limited to this, and may perform determining using the air conditioner consumed power reduction amount ΔAE and the ventilation apparatus consumed power amount ΔVE. For example, the air conditioner consumed power reduction amount ΔAE and the ventilation apparatus consumed power amount ΔVE may be compared and it may be determined that outdoor air cooling or outdoor air heating is to be executed in a case where the air conditioner consumed power reduction amount ΔAE is greater than the ventilation apparatus consumed power amount ΔVE.

(4-11) Modified Example 1 K

In the present embodiment, the controller 10 is provided with the display section 16, but the display section 16 may be omitted.

INDUSTRIAL APPLICABILITY

The present invention is able to be used in a controller for a ventilation apparatus.

REFERENCE SIGNS **LIST**

| | |
|---|---|
| 1 | AIR CONDITIONING SYSTEM |
| 2 | AIR CONDITIONER |
| 3 | VENTILATION APPARATUS |
| 30 | CASING |
| 30a | INTRODUCTION OPENING |
| 30b | AIR SUPPLY OPENING |
| 30c | AIR RETURN OPENING |
| 30d | AIR EXHAUST OPENING |
| 31 | TOTAL HEAT EXCHANGER |
| 34 | DAMPER |
| 37 | AIR SUPPLY FLOW PATH |
| 38a | FIRST EXHAUSTAIR FLOW PATH |
| 38b | SECOND EXHAUST AIR FLOW PATH |
| 4 | TEMPERATURE SENSOR |
| 5 | HUMIDITY SENSOR |
| 10 | CONTROLLER |
| 10a | COMMUNICATION LINE |
| 11 | INTERFACE |
| 12 | ACQUIRING SECTION |
| 13 | CALCULATING SECTION |
| 14 | DETERMINING SECTION |
| 15 | CONTROL SECTION |
| 16 | DISPLAY SECTION |
| SO | OUTDOOR SPACE |
| SI | INDOOR SPACE |

**CITATION LIST**

**PATENT LITERATURE**

PTL 1: Japanese Unexamined Patent Application Publication No. H9-178242
PTL 2: Japanese Unexamined Patent Application Publication No. 2011-21881

**Claims**

1. A controller (10) for a ventilation apparatus (3), which performs heat load treatment for a target space (SI) along with an air conditioner (2) by performing an outdoor air introducing operation where outdoor air (OA) is introduced, comprising:

an information acquiring section (12) configured to acquire information on outdoor temperature (OT), target space temperature (IT) in the target space, and set temperature (SP) of the air conditioner;
an energy amount calculating section (13) configured to calculate an air conditioner consumed energy reduction amount ($\Delta$AE), which is the amount of energy consumed in the air conditioner which is reduced by performing the outdoor air introducing operation, and a ventilation apparatus consumed energy amount ($\Delta$VE) which is consumed by the ventilation apparatus; and
an outdoor air introduction determining section (14) configured to determine that the outdoor air introducing operation is to be performed when the air conditioner consumed energy reduction amount is greater than the ventilation apparatus consumed energy amount in a case where the outdoor temperature, the target space temperature, and the set temperature satisfy predetermined conditions.

2. The controller for the ventilation apparatus according to claim 1, wherein
the information acquiring section is further configured to acquire information on outdoor humidity (OX) and target space humidity (IX) in the target space, and
the outdoor air introduction determining section is configured to determine that the outdoor air introducing operation is to be performed when the air conditioner consumed energy reduction amount is greater than the ventilation apparatus consumed energy amount in a case where the outdoor temperature, the target space temperature, the set temperature, the outdoor humidity, and the target space humidity satisfy predetermined conditions.

3. A controller (10) for a ventilation apparatus (3) which performs heat load treatment for a target space (SI) along with an air conditioner (2) by performing an outdoor air introducing operation where outdoor air (OA) is introduced, comprising:

an information acquiring section (12) configured to acquire information on outdoor temperature (OT), target space temperature (IT) in the target space, set temperature (SP) of the air conditioner, and a correction value ($\Delta$T) which is set based on an air conditioner consumed energy reduction amount ($\Delta$AE), which is the amount of energy consumed in the air conditioner which is reduced by performing the outdoor air introducing operation and a ventilation apparatus consumed energy amount which is consumed by the ventilation apparatus; and
an outdoor air introduction determining section (14) configured to determine that the outdoor air introducing operation is to be performed in a case where a value where the correction value is added to the outdoor temperature, the target space temperature, and the set temperature satisfy predetermined conditions.

4. A controller (10) for a ventilation apparatus (3) which performs heat load treatment for a target space (SI) along with an air conditioner (2) by performing an outdoor air introducing operation where outdoor air (OA) is introduced, comprising:

an information acquiring section (12) configured to acquire information on outdoor temperature (OT), target space temperature (IT) in the target space, and set temperature (SP) of the air conditioner;
an energy amount calculating section (13) configured to calculate an air conditioner consumed energy reduction amount ($\Delta$AE), which is the amount of energy consumed in the air conditioner which is reduced by performing the outdoor air introducing operation, and a ventilation apparatus consumed energy amount which is consumed by the ventilation apparatus;
a correction value setting section (13) configured to set a correction value ($\Delta$T) based on the outdoor temperature, the target space temperature, the air conditioner consumed energy reduction amount, and the ventilation apparatus consumed energy amount; and
an outdoor air introduction determining section (14) configured to determine that the outdoor air introducing operation is to be performed in a case where a value where the correction value is added to the outdoor temperature, the target space temperature, and the set temperature satisfy predetermined conditions.

5. The controller for a ventilation apparatus according to claim 4, wherein
the information acquiring section is further configured to acquire information on outdoor humidity (OX) and target space humidity (IX) in the target space, and
the correction value setting section is configured to set the correction value based on the outdoor temperature, the target space temperature, the outdoor humidity, the target space humidity, the air conditioner consumed energy reduction amount, and the ventilation apparatus consumed energy amount.

**6.** The controller for a ventilation apparatus according to any of claims 1, 2, 4, and 5, further comprising:

a heat load calculating section (13) configured to calculate a heat load (PFC) in the target space,
wherein the information acquiring section is further configured to acquire information on efficiency of energy consumed in the air conditioner, and
the energy amount calculating section is configured to calculate the air conditioner consumed energy reduction amount based on the heat load and the efficiency of energy consumed in the air conditioner.

**7.** The controller for a ventilation apparatus according to any of claims 2 and 5, wherein
the information acquiring section is further configured to acquire information on a ventilation air flow amount (Q) in the ventilation apparatus, specific gravity (p) of the air (IA) in the target space, and efficiency of energy consumed in the air conditioner, further comprising:

a specific enthalpy difference calculating section configured to calculate a specific enthalpy difference ($\Delta$h) between outdoor air and air in the target space based on the outdoor temperature, the target space temperature, the outdoor humidity, and the target space humidity; and
a heat load calculating section configured to calculate the heat load (PFC) in the target space based on the specific enthalpy difference, the ventilation air flow amount, and the specific gravity of the air in the target space, wherein the energy amount calculating section calculates the air conditioner consumed energy reduction amount based on the heat load and the efficiency of energy consumed in the air conditioner.

FIG. 1

FIG. 2

EP 2 902 720 A1

EP 2 902 720 A1

EXHAUST
AIR (EA)

INDOOR
AIR (IA)

OUTDOOR AIR (OA)

SUPPLY
AIR (SA)

FIG. 3

FIG. 4

FIG. 5

EP 2 902 720 A1

|  | REFERENCE VALUE SV ≥ INDOOR TEMPERATURE IT | REFERENCE VALUE SV < INDOOR TEMPERATURE IT |
|---|---|---|
| SET TEMPERATURE SP ≥ INDOOR TEMPERATURE IT | OUTDOOR AIR COOLING PROHIBITED | OUTDOOR AIR COOLING PROHIBITED |
| SET TEMPERATURE SP < INDOOR TEMPERATURE IT | OUTDOOR AIR COOLING PROHIBITED | DRIVING OF OUTDOOR AIR COOLING |

FIG. 6

| | REFERENCE VALUE SV ≤ INDOOR TEMPERATURE IT | REFERENCE VALUE SV > INDOOR TEMPERATURE IT |
|---|---|---|
| SET TEMPERATURE SP ≤ INDOOR TEMPERATURE IT | OUTDOOR AIR HEATING PROHIBITED | OUTDOOR AIR HEATING PROHIBITED |
| SET TEMPERATURE SP > INDOOR TEMPERATURE IT | OUTDOOR AIR HEATING PROHIBITED | DRIVING OF OUTDOOR AIR HEATING |

FIG. 7

FIG. 8

START OF OUTDOOR
AIR HEATING MODE

S201
ACQUIRE EACH TYPE
OF INFORMATION

S202
CALCULATE ΔT AND SV

S203
OUTDOOR AIR HEATING
STOPPED?                    No

Yes

S204
No          SP > IT?          S207
                              SP > IT?          No

Yes

S205
No          SV > IT?          S208
                              Yes
                              SV > IT?          No

S206                Yes
START OUTDOOR AIR HEATING

Yes

S209
FINISH OUTDOOR AIR HEATING

FIG. 9

## INTERNATIONAL SEARCH REPORT

| International application No. |
| --- |
| PCT/JP2013/066567 |

A. CLASSIFICATION OF SUBJECT MATTER
*F24F11/02*(2006.01)i, *F24F7/007*(2006.01)i

According to International Patent Classification (IPC) or to both national classification and IPC

B. FIELDS SEARCHED

Minimum documentation searched (classification system followed by classification symbols)
F24F11/02, F24F7/007

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | JP 2004-12022 A (Daikin Industries, Ltd.), 15 January 2004 (15.01.2004), entire text (Family: none) | 1-7 |
| Y | JP 9-178242 A (Daikin Industries, Ltd.), 11 July 1997 (11.07.1997), entire text (Family: none) | 1-7 |
| Y | JP 2011-21881 A (Mitsubishi Electric Corp.), 03 February 2011 (03.02.2011), entire text (Family: none) | 1-7 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 30 August, 2013 (30.08.13) | 10 September, 2013 (10.09.13) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2013/066567 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | JP 11-190549 A (Mitsubishi Electric Corp.), 13 July 1999 (13.07.1999), paragraph [0019] (Family: none) | 6-7 |
| Y | JP 2010-121912 A (Daikin Industries, Ltd.), 03 June 2010 (03.06.2010), entire text (Family: none) | 7 |
| Y | JP 2002-357485 A (Sanki Engineering Co., Ltd.), 13 December 2002 (13.12.2002), entire text (Family: none) | 7 |
| A | JP 2005-147563 A (Daikin Industries, Ltd.), 09 June 2005 (09.06.2005), entire text (Family: none) | 1 |

Form PCT/ISA/210 (continuation of second sheet) (July 2009)

**EP 2 902 720 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H9178242 B

- JP 2011021881 A